# EUROPÄISCHE PATENTANMELDUNG

(11) **EP 4 785 834 A1**
(43) Veröffentlichungstag der Anmeldung: **05.08.2026**
(21) Anmeldenummer: 25220170.2
(22) Anmeldetag: 02.12.2025
(51) Int. Cl.: A47J 36/02, A47J 36/32

(54) **GARGESCHIRR**

(30) Priorität: 04.02.2025 DE 102025104059
(71) Anmelder: Miele & Cie. KG, 33332 Gütersloh (DE)
(72) Erfinder: Müller, Christoph, 32289 Rödinghausen (DE); Hölscher, Britta, 30167 Hannover (DE)

(57) **Zusammenfassung**

Gargeschirr (1) umfassend einen Gargeschirrgrundkörper (2), ein Anbauteil (3) und eine Elektronikeinrichtung (4), wobei der Gargeschirrgrundkörper (2) einen Boden (5) und eine Wandung (6) umfasst, welche ein Aufnahmevolumen (7) begrenzen. Das Anbauteil (3) ist an einer Außenseite (8) der Wandung (6) an dem Gargeschirrgrundkörper (2) angeordnet und die Elektronikeinrichtung (4) ist in dem Anbauteil (3) aufgenommen. Weiterhin umfasst das Anbauteil (3) eine äußere Abdeckung (9), welche in einem an den Boden (5) des Gargeschirrgrundkörpers (2) angrenzenden Abschnitt wenigstens ein Abdeckelement (10) umfasst, welches abschnittsweise einen Mehrschichtaufbau (11) aufweist, wobei der Mehrschichtaufbau (11) eine äußere erste Lage (12) aus einem nicht-ferromagnetischen Metall (13) und eine zweite Lage (14) aus einem anderen Material (15) umfasst.

## Beschreibung

Die vorliegende Erfindung betrifft ein Gargeschirr umfassend wenigstens einen Gargeschirrgrundkörper, wenigstens ein Anbauteil und wenigstens eine Elektronikeinrichtung. Dabei umfasst der Gargeschirrgrundkörper wenigstens einen Boden und wenigstens eine Wandung, wobei durch den Boden und die Wandung wenigstens ein Aufnahmevolumen begrenzt wird. Das Anbauteil ist an einer Außenseite der Wandung an dem Gargeschirrgrundkörper angeordnet und die Elektronikeinrichtung ist wenigstens abschnittweise in dem Anbauteil aufgenommen.

Gargeschirr der zuvor beschriebenen Art ist sogenanntes smartes Gargeschirr, welches über das Anbauteil mit der Elektronikeinrichtung unterstützende Funktionalitäten für einen Garprozess anbieten können.

Die Druckschrift DE 10 2022 122 251 A1 zeigt schematisch ein Gargeschirr mit einer Elektronikeinrichtung für unterstützende Funktionalitäten bei einem Garprozess.

Die Elektronikeinrichtung bzw. das Anbauteil können z. B. als sogenanntes Bedienpult an der Außenseite einer Gargeschirrwandung angeordnet sein. Die Elektronikeinrichtung umfasst in der Regel wenigsten seine Steuereinrichtung, eine Kommunikationseinrichtung und eine Bedieneinrichtung vorzugsweise mit einer Anzeige. Ein derartiges Gargeschirr kann dann z. B. mit dem aktuell verwendeten Kochfeld kommunizieren und es ist teilweise möglich, Informationen zu einem Garprozess auf dem Gargeschirr bzw. dem Bedienpult bzw. dem Anbauteil anzuzeigen und auch eine Steuerung kann oft über das Gargeschirr erfolgen.

Derartiges smartes Gargeschirr umfasst zudem in der Regel einen oder auch mehrere Sensoren, insbesondere Temperatursensoren, welche z. B. in unterschiedlichen Höhen an der Wandung des Gargeschirrs und am Boden platziert sind, sodass über die unterschiedlichen Temperaturen an den einzelnen Sensoren während eines Garprozesses auch automatisch z. B. die Leistung des Kochfeldes für das Gargeschirr verändert werden kann.

Das Anbauteil insbesondere durch die Verwendung von wenigstens einem Sensor an dem Gargeschirrboden an der Wandung des Gargeschirrs weit heruntergezogen, oft bis an den Boden heran bzw. bis hin zum unteren Rand des Bodens. Dadurch können thermische Probleme entstehen. Einerseits durch den direkten Kontakt zu dem Boden, andererseits durch einstrahlende elektromagnetische Strahlung durch die Induktionsspulen des verwendeten Kochfeldes. Hierdurch kann sich das Anbauteil in dem unteren Bereich teils extrem aufheizen, wodurch gewünschte Grenztemperaturen von beispielsweise maximal 250 °C für anliegende Bereiche bzw. Bauteile nicht mehr eingehalten werden können.

Um dies zu vermeiden, ist im Stand der Technik bekannt geworden, im unteren Bereich bzw. im bodennahen Bereich des Anbauteils eine Edelstahlabdeckung zu verwenden, welche geschlitzt ausgeführt ist. Dadurch kann das Einkoppeln von elektromagnetischer Strahlung derart abgeschwächt werden, dass ein zu starkes Aufheizen durch die einkoppelnde Strahlung verhindert wird. Nachteilung durch die Schlitzung ist jedoch, dass Feuchtigkeit bzw. Wasser beim Spülen hinter die Abdeckung gelangen kann. Daher müssen die Schlitze aufwendig durch ein nicht-ferromagnetisches Material abgedichtete bzw. ausgegossen werden, was aufwendig ist und optisch nicht optimal ist.

Es ist daher die Aufgabe der vorliegenden Erfindung, ein Gargeschirr zur Verfügung zu stellen, bei welchem eine zu starke Hitzeentwicklung effektiv und konstruktiv einfacher erreicht wird.

Diese Aufgabe wird gelöst durch ein Gargeschirr mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Gargeschirr umfasst wenigstens einen Gargeschirrgrundkörper, wenigstens ein Anbauteil und wenigstens eine Elektronikeinrichtung, wobei der Gargeschirrgrundkörper wenigstens einen Boden und wenigstens eine Wandung umfasst, welche zusammen wenigstens ein Aufnahmevolumen begrenzen. Das Anbauteil ist an einer Außenseite der Wandung an dem Gargeschirrgrundkörper angeordnet, wobei die Elektronikeinrichtung wenigstens abschnittsweise in dem Anbauteil aufgenommen ist. Weiterhin umfasst das Anbauteil wenigstens eine äußere Abdeckung, welche wenigstens in einem an den Boden des Gargeschirrgrundkörpers angrenzenden Abschnitt durch das wenigstens eine Abdeckelement ausgebildet ist, welches wenigstens abschnittsweise und insbesondere vollständig einen Mehrschichtaufbau aufweist. Dabei umfasst der Mehrschichtaufbau wenigstens eine äußere erste Lage aus einem nicht-ferromagnetischen Metall bzw. Material und wenigstens eine zweite Lage aus einem anderen Material.

Das andere Material ist insbesondere ein Schirmmaterial, welches nicht identisch zu dem nicht-ferromagnetischen Metall der äußeren ersten Lage ist. Dabei soll das andere Material insbesondere dazu dienen, in das Anbauteil bzw. in das Abdeckelement einstrahlende elektromagnetische Strahlung anders durchzuleiten bzw. anders darauf zu reagieren als das Material der ersten Lage bzw. das nicht-ferromagnetische Metall.

Als anderes Material kann vorzugsweise und beispielhaft ein anderes nicht-ferromagnetisches Material bzw. Metall sein. Es kann jedoch vorzugsweise auch ferromagnetisches Material, Kupfer, eine Eisen-Nickel-Legierung und/oder dergleichen als Schirmmaterial bzw. als anderes Material Verwendung finden.

Insbesondere ist die äußere Abdeckung wenigstens zweiteilig ausgeführt und/oder weist wenigstens in einem oberen Abschnitt ein anderes Material als in dem unteren Abschnitt auf. Dabei ist der obere Teil der Abdeckung in vorzugsweise aus Kunststoff gefertigt, wodurch das Anbauteil und somit das gesamte Gargeschirr vom Gewicht leichter ausgebildet werden können.

Das Abdeckelement bzw. die Abdeckung im unteren Bereich dient insbesondere als Flammschutz und/oder ist als Teil eines Flammschutzes ausgebildet. Dies kann insbesondere dadurch erreicht werden, dass das Abdeckelement die äußere Abdeckung des Anbauteils zumindest abschnittsweise ausbildet.

Auch soll insbesondere durch das untere Abdeckelement verhindert werden, dass elektromagnetische Strahlung von einem Induktionskochfeld zu stark in das Anbauteil und/oder somit die Elektronikeinrichtung einstrahlt und zu hohe Temperaturen insbesondere an Kunststoffbauteilen des Anbauteils verursacht.

Das Anbauteil bzw. die Elektronikeinrichtung ist insbesondere derart ausgebildet, dass das Gargeschirr ein sogenanntes smartes Gargeschirr ist. Ein derartiges Gargeschirr umfasst insbesondere wenigstens eine Steuereinrichtung, eine Kommunikationseinrichtung, eine Bedieneinrichtung, eine Anzeigeeinrichtung und/oder einen oder mehrere Sensoren.

Das erfindungsgemäße Gargeschirr bietet viele Vorteile. Ein erheblicher Vorteil ist, dass durch den Mehrschichtaufbau der Abdeckung bzw. des Abdeckelements die eingekoppelten Ströme bzw. Störfelder bzw. elektromagnetische Strahlung derart verändert wird, dass ein Flammschutz bzw. die Abdeckung bzw. das Anbauteil eine vorbestimmte Temperatur nicht überschreitet.

Dabei ist bevorzugt, dass eine Grenztemperatur von 250 °C insbesondere an den an das Abdeckelement angrenzenden Kunststoffbauteilen nicht überschritten wird. Anders als die im Stand der Technik bekannten Möglichkeiten, eine zu hohe Temperatur zu vermeiden, ist das Abdeckelement aus einem Mehrschichtmaterial wesentlich einfacher und kostengünstiger herzustellen. Je nach Ausgestaltung kann das Material einfach zugekauft werden.

Durch die Ausgestaltung des Anbauteils, bei welcher das Abdeckelement die äußere Abdeckung des Anbauteils zumindest abschnittsweise ausbildet, kann beispielsweise eine einheitliche Optik gewährleistet werden, was für den Endverbraucher oft ein wesentlicher Aspekt ist.

Bevorzugt ist das andere Material der zweiten Lage ein nicht-ferromagnetisches Metall, wobei sich das nicht-ferromagnetische Metall der ersten Lage und das nicht-ferromagnetische Metall der zweiten Lage unterscheiden. Durch die Verwendung von zwei (unterschiedlichen) nicht-ferromagnetischen Metallen kann ein besonders geeigneter Mehrschichtaufbau zur Verfügung gestellt werden, welche eingekoppelte bzw. induzierte Ströme bzw. Störfelder besonders günstig verändert bzw. abblockt bzw. umwandelt.

Besonders bevorzugt ist das nicht-ferromagnetische Material Metall der ersten Lage nicht-ferromagnetischer Edelstahl. Dabei ist insbesondere eine nicht-ferromagnetische Edelstahllegierung vorgesehen, welche optisch ansprechende Eigenschaften aufweist und zudem durch indizierte Ströme nicht zu stark aufgeheizt wird.

In vorteilhaften Weiterbildungen ist das nicht-ferromagnetische Metall der zweiten Lage Aluminium. Dabei ist insbesondere eine geeignete Aluminiumlegierung vorgesehen, welche in Wirkverbindung mit dem nicht-ferromagnetischen Metall bzw. Material der ersten Lage vorteilhaft zusammenwirkt, sodass gekoppelte bzw. induzierte Ströme bzw. Störfelder gut abgeschwächt bzw. abgehalten werden.

Bevorzugt umfasst das Abdeckelement wenigstens eine dritte Lage aus einem nicht-ferromagnetischen Metall bzw. Material. Dabei ist eine dritte Lage insbesondere eine Lage, welche sich an die zweite Lage anschließt, sodass die zweite Lage zwischen der ersten Lage und der dritten Lage angeordnet bzw. von eingeschlossen ist.

Bevorzugt ist das Material bzw. Metall der dritten Lage nicht-ferromagnetischer Edelstahl. Dabei ist insbesondere bevorzugt, dass das Material der ersten Lage und der dritten Lage gleich ist. So kann erreicht werden, dass ein Edelstahlbauteil bzw. eine Edelstahlabdeckelement mit einem Aluminiumkern bereitgestellt wird.

Die dritte Lage kann auch beschichtet sein mit Kohlenstoff, insbesondere DLC, Keramik, insbesondere Glaskeramik, oder Kunststoff, insbesondere PTFE.

Es ist weiter bevorzugt, dass die erste Lage und die dritte Lage die zweite Lage vollständig einfassen. Dabei ist insbesondere vorteilhaft, dass eine dichte Einfassung vorgesehen ist, was insbesondere bei der Verwendung von zum Beispiel Aluminium als Material der zweiten Lage Vorteile bringen. Aluminium würde nämlich bei der Reinigung in der Spülmaschine durch den aggressiven Reiniger auswaschen, was nicht gewünscht ist. Dies kann durch eine dichte Einfassung der zweiten Lage zwischen der ersten Lage und der dritten Lage verhindert werden.

Besonders bevorzugt sind die erste Lage und die dritte Lage an den Rändern umlaufend miteinander verschweißt. Dabei ist insbesondere ein dichtes Verschweißen vorgesehen, sodass die zuvor ausgeführten Vorteile, insbesondere ein dichter Einschluss beispielsweise eines Aluminiumkerns, gewährleistet ist.

Je nach Ausgestaltung ist bevorzugt, dass das Abdeckelement weitere Lagen umfasst, wobei insbesondere ein Mehrschichtaufbau vorgesehen ist, der immer wechselweise bzw. abwechselnd fortgeführt wird. So kann beispielsweise mehrere nicht-ferromagnetische Edelstahllagen vorgesehen sein, welche beispielsweise immer zwischen zwei Edelstahllagen eine Lage aus Aluminium oder einem anderen Schirmmaterial einfassen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Gargeschirrs in einer Ansicht von vorne;
- Figur 2: eine rein schematische Darstellung des Ausführungsbeispiels gemäß Figur 1 von der Seite; und
- Figur 3: eine rein schematische Darstellung eines Abdeckelements für ein erfindungsgemäßes Gargeschirrs in einer Schnittansicht von der Seite.

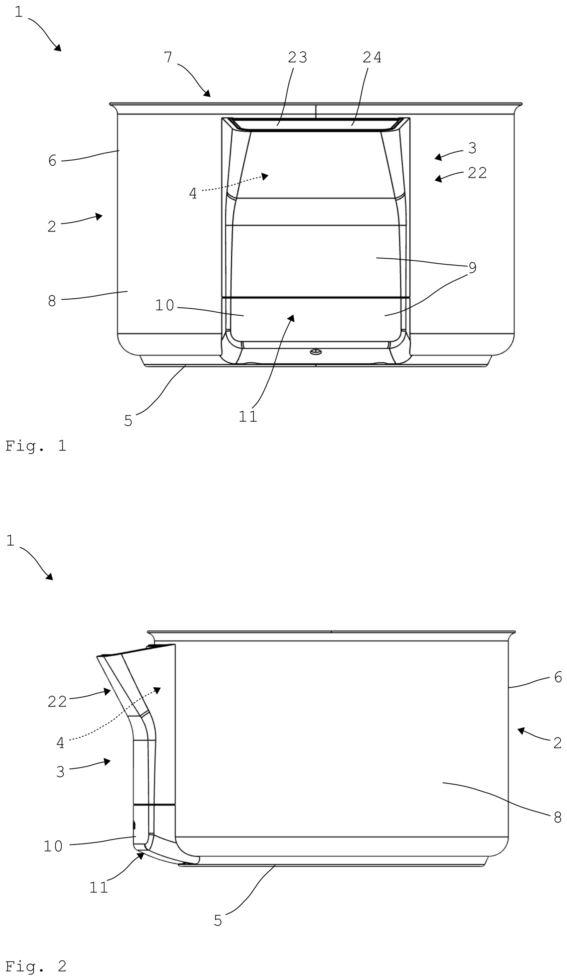

In Figur 1 ist rein schematisch ein erfindungsgemäßes Gargeschirr 1 in einer frontalen Ansicht dargestellt. Das hier gestellte Gargeschirr 1 umfasst einen Kochgeschirrgrundkörper 2, welcher einen Boden 5 und eine Wandung 6 umfasst, welche zusammen ein Aufnahmevolumen 7 begrenzen.

In dieses Aufnahmevolumen 7 können Lebensmittel zum Garen hineingegeben werden. Je nach Ausgestaltung kann die Öffnung des Aufnahmevolumens 7 dann auch mit einem Deckel abgedeckt werden, welcher in den Figuren nicht dargestellt ist. Weiterhin können je nach Ausgestaltung verschieden ausgestattete verschiedenartig ausgestaltete Griffe vorgesehen sein. Ein Griff ist in den Figuren nicht dargestellt.

Das gezeigte Gargeschirr 1 ist als ein sogenanntes smartes Gargeschirr 1 ausgebildet, wozu es ein Anbauteil 3 umfasst, welches an der Außenseite 8 der Wandung 6 angebracht ist. Innerhalb des Anbauteils 3, welches hier als sogenanntes Bedienpult 22 ausgeführt ist, ist eine Elektronikeinrichtung 4 angebracht bzw. untergebracht bzw. angeordnet.

Diese Elektronikeinrichtung 4 umfasst hier eine nicht dargestellt Steuereinrichtung und eine Kommunikationseinrichtung sowie eine von außerhalb des Anbauteils 3 im oberen Bereich zugängliche Bedieneinrichtung 23 mit einer integrierten Anzeigeeinrichtung 24.

Weiterhin umfasst die Elektronikeinrichtung 4 bzw. das Anbauteil 3 in dem hier gezeigten Ausführungsbeispiel nicht dargestellte Temperatursensoren, welche einerseits in unterschiedlichen Höhen an der Außenseite 8 der Wandung 6 des Gargeschirrgrundkörpers 2 und an bzw. in dem Boden 5 vorgesehen sind. So kann über die Temperaturmessung an verschiedenen Punkten unter anderem automatisch oder teilautomatisch ein Garvorgang unterstützt und/oder automatisch ausgeführt werden.

Zudem können einem Benutzer auf dem smarten Gargeschirr 1 bestimmte Informationen angegeben werden. Weiterhin kann das Gargeschirr 1 beispielsweise mit einem Kochfeld und/oder anderen Komponenten in Wirkverbindung stehen, sodass auch Einstellungen zum Kochfeld beispielsweise über das Gargeschirr 1 bzw. die Elektronikeinrichtung 4 erfolgen können.

Das hier dargestellte Gargeschirr 1 ist zum Betrieb auf einem Induktionskochfeld ausgebildet, wozu insbesondere der Boden 5 des Kochgeschirrgrundkörpers 2 entsprechend ausgebildet ist.

Weiterhin ist dargestellt, dass das Anbauteil 3 insbesondere durch die Verwendung von bodennahen und/oder in den Boden 5 integrierten Sensoren bis an die Unterseite des Bodens 5 gezogen ist. Hierdurch können verschiedene thermische Probleme entstehen, da einerseits der heiße Boden 5 Hitze an das Anbauteil abgeben kann. Dies kann durch entsprechende Maßnahmen verhindert werden.

Problematisch ist jedoch auch, dass die durch die Induktionsspulen des Kochfeldes erzeugte elektromagnetische Strahlung in das Anbauteil 3 einkoppeln kann, wodurch dieses eventuell zu stark erhitzt werden würde. Dies gilt insbesondere für verwendete Kunststoffkomponenten, bei welchen insbesondere eine Grenztemperatur von maximal 250 °C nicht überschritten werden soll.

Erfindungsgemäß umfasst das Anbauteil und 3 eine äußere Abdeckung 9, welche die innen liegenden Komponenten der Elektronikeinrichtung 4 (optisch ansprechend) abdeckt. Dabei umfasst die äußere Abdeckung 9 in dem einen Boden 5 angrenzenden Bereich ein Abdeckelement 10, welches erfindungsgemäß einen Mehrschichtaufbau 11 aufweist. Wie das Abdeckelement 10 bzw. der Mehrschichtaufbau ausgeführt sind, ist in den nachfolgenden Figuren näher beschrieben.

In Figur 2 ist das Ausführungsbeispiel gemäß Figur 1 in einer Seitenansicht dargestellt. Auch hier kennt man, dass das Abdeckelement bis an den Boden 5 des Gargeschirrgrundkörpers 2 anschließt.

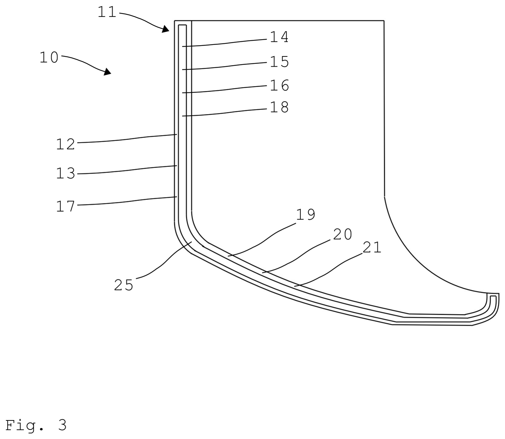

In Figur 3 ist in einer Schnittansicht von der Seite ein Abdeckelement 10 als unterer Abschnitt einer äußeren Abdeckung 9 eines Anbauteils 3 eines Ausführungsbeispiels eines erfindungsgemäßen Gargeschirrs 1 rein schematisch dargestellt.

Hier ist zu erkennen, dass das Abdeckelement 10 einen Mehrschichtaufbau 11 aufweist, wobei eine erste äußere Lage 12 vorgesehen ist, welche hier aus einem nicht-ferromagnetischen Metall 13 besteht. Dabei ist hier als Material für die äußere Lage 12 nicht-ferromagnetischer Edelstahl 17 vorgesehen.

In dem gezeigten Ausführungsbeispiel grenzt unmittelbar an die erste Lage 12 eine weitere bzw. zweite Lage 14 an, welche aus einem anderen Material 15 als die erste Lage 12 besteht. Dabei ist hier als zweites Material 15 für die zweite Lage auch ein nicht-ferromagnetisches Metall 16 vorgesehen, welches jedoch unterschiedlich zu dem nicht-ferromagnetischen Metall 13 der ersten Lage 12 ist. Im Speziellen ist hier als nicht-ferromagnetisches Metall 16 der zweiten Lage 14 Aluminium 18 vorgesehen.

Dabei sind grundsätzlich zwei verschiedene Materialien für erste Lage 12 und die zweite Lage 14 vorgesehen, wobei das Material 15 der zweiten Lage insbesondere ein Schirmmaterial ist bzw. Material, das elektromagnetische Strahlung abschirmt und/oder anders durchlässt bzw. weiterleitet als das Material der ersten Lage.

Weiterhin ist dargestellt, dass in dem gezeigten Ausführungsbeispiel eine an die zweite Lage 14 anschließende dritte Lage 19 vorgesehen ist, welche hier auch durch ein nicht-ferromagnetisches Metall 25 zur Verfügung gestellt. Dabei ist hier auch ein nicht-ferromagnetischer Edelstahl 21 vorgesehen, wobei hier das Material der ersten Lage 12 und der dritten Lage 19 identisch sind.

Weiterhin ist dargestellt, dass das nicht-ferromagnetische Metall 13 der ersten Lage und das nicht-ferromagnetische Metall 20 der dritten Lage die zweite Lage 14 vollständig umschließen, wozu die äußeren beiden Lagen 12, 19 hier umlaufend verschweißt sind. Hierdurch wird es möglich, dass ein Abdeckelement 10 aus Edelstahl zur Verfügung gestellt wird, welches im Inneren einen Aluminiumkern 25 aufweist.

So kann durch einen entsprechend gewählten Mehrschichtaufbau 11 für das Abdeckelement 10 eine besonders geeignete Abschirmung gegenüber elektromagnetischer Einstrahlung bzw. gegenüber einstrahlenden Störfeldern bzw. Strömen zur Verfügung gestellt werden, sodass die Weitergabe von Energie bzw. ein übermäßiges Erhitzen an angrenzenden Bauteilen des Anbauteils 3 bzw. der Elektronikeinrichtung 4, insbesondere wenn dies aus Kunststoff gefertigt sind, effektiv verhindert bzw. ausreichend reduziert wird.

### Bezugszeichenliste

- 1: Gargeschirr
- 2: Gargeschirrgrundkörper
- 3: Anbauteil
- 4: Elektronikeinrichtung
- 5: Boden

- 6: Wandung
- 7: Aufnahmevolumen
- 8: Außenseite
- 9: äußere Abdeckung
- 10: Abdeckelement

- 11: Mehrschichtaufbau
- 12: erste Lage
- 13: nicht-ferromagnetisches Metall
- 14: zweite Lage
- 15: Material

- 16: nicht-ferromagnetisches Metall
- 17: nicht-ferromagnetischer Edelstahl
- 18: Aluminium
- 19: dritte Lage
- 20: nicht-ferromagnetisches Metall

- 21: nicht-ferromagnetischer Edelstahl
- 22: Bedienpult
- 23: Bedieneinrichtung
- 24: Anzeigeeinrichtung
- 25: Aluminiumkern

## Patentansprüche

1. Gargeschirr (1) umfassend
wenigstens einen Gargeschirrgrundkörper (2), wenigstens ein Anbauteil (3) und wenigstens eine Elektronikeinrichtung (4),
wobei der Gargeschirrgrundkörper (2) wenigstens einen Boden (5) und wenigstens eine Wandung (6) umfasst und wobei durch den Boden (5) und die Wandung (6) wenigstens ein Aufnahmevolumen (7) begrenzt wird,
wobei das Anbauteil (3) an einer Außenseite (8) der Wandung (6) an dem Gargeschirrgrundkörper (2) angeordnet ist,
wobei die Elektronikeinrichtung (4) wenigstens abschnittweise in dem Anbauteil (3) aufgenommen ist,
wobei das Anbauteil (3) wenigstens eine äußere Abdeckung (9) umfasst,
**dadurch gekennzeichnet, dass**
die äußere Abdeckung (9) wenigstens in einem an den Boden (5) des Gargeschirrgrundkörpers (2) angrenzenden Abschnitt durch das wenigstens eine Abdeckelement (10) ausgebildet ist,
wobei das Abdeckelement (10) wenigstens abschnittsweise einen Mehrschichtaufbau (11) aufweist,
wobei der Mehrschichtaufbau (11) wenigstens eine äußere erste Lage (12) aus einem nicht-ferromagnetischen Metall (13) und wenigstens eine zweite Lage (14) aus einem anderen Material (15) umfasst.

2. Gargeschirr (1) nach Anspruch 1, wobei das andere Material (15) der zweiten Lage (14) ein nicht-ferromagnetisches Metall (16) ist, wobei sich das nicht-ferromagnetische Metall (13) der ersten Lage (12) und das nicht-ferromagnetische Metall (16) der zweiten Lage (14) unterscheiden.

3. Gargeschirr (1) nach dem vorhergehenden Anspruch, wobei das nicht-ferromagnetische Metall (13) der ersten Lage (12) nicht-ferromagnetischer Edelstahl (17) ist.

4. Gargeschirr (1) nach einem der vorhergehenden Ansprüche, wobei das nicht-ferromagnetische Metall (16) der zweiten Lage (14) Aluminium (18) ist.

5. Gargeschirr (1) nach einem der vorhergehenden Ansprüche, wobei das Abdeckelement (10) wenigstens eine dritte Lage (19) aus einem nicht-ferromagnetischen Metall (20) umfasst.

6. Gargeschirr (1) nach dem vorhergehenden Anspruch, wobei das nicht-ferromagnetische Metall (20) der dritten Lage (19) nicht-ferromagnetischer Edelstahl (21) ist.

7. Gargeschirr (1) nach einem der beiden vorhergehenden Ansprüche, wobei die erste Lage (12) und die dritte Lage (21) die zweite Lage (14) vollständig einfassen.

8. Gargeschirr (1) nach einem der drei vorhergehenden Ansprüche, wobei die erste Lage (12) und die dritte Lage (14) an den Rändern miteinander verschweißt sind.

9. Gargeschirr (1) nach einem der vorhergehenden Ansprüche, wobei das Abdeckelement (10) weitere Lagen umfasst.
